(19)

Europäisches
Patentamt
European
Patent Office
Office européen
des brevets

(11) **EP 4 105 623 A1**

(12) **EUROPEAN PATENT APPLICATION**

(43) Date of publication:
**21.12.2022 Bulletin 2022/51**

(21) Application number: **22178912.6**

(22) Date of filing: **14.06.2022**

(51) International Patent Classification (IPC):
**G01L 1/14** *(2006.01)* **G06F 3/041** *(2006.01)*
**B25J 13/08** *(2006.01)* **G06F 3/044** *(2006.01)*

(52) Cooperative Patent Classification (CPC):
**G01L 1/146; G06F 3/0445; G06F 3/0446;**
**G06F 3/0447;** G06F 2203/04112

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **14.06.2021 JP 2021098881**

(71) Applicant: **Futaba Corporation**
**Mobara-shi, Chiba-ken 297-0033 (JP)**

(72) Inventors:
• **IDE, Satoshi**
**Chiba-ken, 297-0033 (JP)**
• **TAGUCHI, Yuhi**
**Chiba-ken, 297-0033 (JP)**

(74) Representative: **Samson & Partner Patentanwälte**
**mbB**
**Widenmayerstraße 6**
**80538 München (DE)**

(54) **CAPACITIVE PRESSURE SENSOR**

(57) A capacitive pressure sensor is provided. The capacitive pressure sensor comprises a dielectric layer, a light-transmitting first electrode, a second electrode, a display layer and a measuring device. The dielectric layer is made of a foam. The first electrode is disposed on a first surface of the dielectric layer, wherein a pressure is applied to the first electrode. The second electrode is disposed on a second surface of the dielectric layer opposite to the first surface. The second electrode includes a plurality of unit electrodes having a predetermined shape. The display layer is disposed between the first electrode and the dielectric layer or between the second electrode and the dielectric layer. The measuring device is configured to detect a measurement value of a capacitance of the dielectric layer for each unit electrode by causing a potential difference between the first electrode and the second electrode.

*FIG. 1A*

EP 4 105 623 A1

**Description**

Technical Field

The present disclosure relates to a capacitive pressure sensor having a structure in which a dielectric layer is embedded between two electrodes, the capacitive pressure sensor being configured to detect a pressure from a change in a dielectric constant of the dielectric layer deformed by a pressure applied to one of the electrodes; and, more particularly, to a high-performance capacitive pressure sensor capable of performing high-precision position detection and pressure detection and realizing a wide application range by displaying a pattern related with the detection function.

Background

Japanese Laid-open Patent Publication No. 2015-7562 discloses an invention of a capacitive sensor. The capacitive sensor of the invention includes a dielectric layer 30, a sensor unit S having a front side electrode portion 32X disposed on a front side of the dielectric layer 30 and a back side electrode portion 33Y disposed on a back side of the dielectric layer 30, and a control device 22 that is electrically connected to the sensor unit S to apply a voltage to the sensor unit S and measure the amount of electricity related to the capacitance of the sensor unit S. In accordance with the capacitive sensor 1, a foam having a semi-independent bubble structure is used for the dielectric layer 30, so that a load detection range is wide and the dielectric layer cannot be easily collapsed.

International Publication No. WO2017/057598 discloses an invention of a capacitive sensor. The capacitive sensor of the invention includes a dielectric layer 20 made of an elastomer, and a pair of electrode units 30 and 40 having electrode layers 01X to 08X and electrode layers 01Y to 08Y, respectively, and arranged with the dielectric layer 20 interposed therebetween in a thickness direction. A pressure sensing unit D is set at a portion where the electrode layers 01X to 08X and the electrode layers 01Y to 08Y face each other via the dielectric layer 20. At a pressure range higher than 0 MPa and lower than 0.015 MPa, the sensitivity of the capacitive sensor 1 is equal to or higher than $7.5 \times 10^{-11}$ F/MPa and equal to or lower than $7.5 \times 10^{-10}$ F/MPa. The pressure-strain curve thereof does not have two inflection points unlike the conventional case, and has a shape in which the strain increases monotonically over a wide pressure range. In accordance with this capacitive sensor, a load detection range is wide and, particularly, the effect of accurately detecting a small load can be obtained.

Summary

A capacitive touch panel is widely used as an input/output device of an electronic device or the like. The capacitive touch panel has a function of outputting a position on a panel surface touched by a user as position information expressed by X and Y coordinates, but generally cannot detect a pressing force or a pressure. However, in the capacitive touch panel, further expansion of applications beyond the current state can be expected if the pressing force or the pressure at the position on the panel surface touched by a user can be detected together with the position information on the panel surface using the X and Y coordinate, because the corresponding pressure is the position information of the Z coordinate perpendicular to the panel surface.

For example, the X and Y coordinates can be used to detect the position on the panel surface touched by a user, and the Z coordinate can be used to detect a user's gesture when the user touches the panel surface. In other words, when a user presses a certain position on the panel surface for an intended purpose, the touch panel may output the position information corresponding to the touched position as a signal. Further, in order to check whether or not a user has pressed the touch panel or a pressing strength, it is possible to detect a pressure when the user touches the panel surface and output a signal corresponding to the detection value.

The inventors of the present disclosure have an idea of displaying a pattern (figure or symbol) indicating a position to be pressed by a user on a panel surface in order to further expand the use and function of the above-described touch panel. In other words, if such a pattern is displayed on the panel surface of the touch panel, the detected X and Y coordinates can be used for determining a pattern on the panel surface that corresponds to the position touched by the user on the panel surface. Further, if a certain function is assigned to the pattern touched by the user, it is possible to determine a user's operation amount for executing the function of the pattern based on the value of the pressure applied to the pattern. A simple structure in which a seal with a printed pattern is attached to a surface of a touch panel, i.e., a surface of an upper electrode disposed on an upper surface side of a dielectric layer and to which a user applies a pressure, is advantageous in that it has a low manufacturing cost. However, such a structure has a low display quality because the printed pattern is viewed by the reflected light, and has no sense of luxury because the printed pattern cannot be visually recognized when the surroundings are dark.

As described in "Background," a general conventional capacitive sensor has a certain load detection range, but does not have a function of accurately detecting both a position and a pressure on a panel surface. Further, a general conventional capacitive sensor has no light-transmitting property because two electrodes are disposed on both sides of a dielectric layer without a gap therebetween. Accordingly, the general conventional capacitive sensor does not have a function of realizing a high-quality display on the panel surface with transmitted light. There is not known any capacitive sensor capable of realizing high-precision detection of both a position and a pressure and displaying a pattern related to the detection function with a high quality.

The present disclosure has been made to solve the problems of the conventional techniques described above, and has a purpose of providing a capacitive pressure sensor capable of performing high-precision detection of a position and a pressure and realizing a wide application range by displaying a pattern related to the detection function with a high quality.

A capacitive pressure sensor according to a first aspect of the present disclosure comprises: a dielectric layer made of a foam; a light-transmitting first electrode disposed on a first surface of the dielectric layer, wherein a pressure is applied to the first electrode; a second electrode disposed on a second surface of the dielectric layer opposite to the first surface, the second electrode including a plurality of unit electrodes having a predetermined shape; a display layer disposed between the first electrode and the dielectric layer or between the second electrode and the dielectric layer; and a measuring device configured to detect a measurement value of a capacitance of the dielectric layer for each unit electrode by causing a potential difference between the first electrode and the second electrode.

According to a second aspect of the present disclosure, in the capacitive pressure sensor of the first aspect, each of the first electrode and the second electrode is made of a light-transmitting material or has a light-transmitting structure.

According to a third aspect of the present disclosure, in the capacitive pressure sensor of the first aspect or the second aspect, an electrode area of the unit electrode is determined using: an actual measurement data indicating a relationship between the electrode area of the unit electrode and a change amount of the measurement value detected for each unit electrode by the measuring device when a pressure is applied to the first electrode; and a minimum value of the change amount of the measurement value determined by conditions including the number of detection steps of a pressure detected for each unit electrode by the measuring device.

Brief Description of the Drawings

The objects and features of the present disclosure will become apparent from the following description of embodiments, given in conjunction with the accompanying drawings, in which:

Fig. 1A shows a schematic structure of a capacitive pressure sensor;
Fig. 1B schematically shows deformation of a dielectric layer in the case of pressing the capacitive pressure sensor;
Fig. 2A is an exploded perspective view showing the structure of the capacitive pressure sensor according to an embodiment;
Fig. 2B is a plan view seen from a front surface side on which a display pattern is displayed in the capacitive pressure sensor according to an embodiment;
Fig. 2C is a plan view of a second electrode of the capacitive pressure sensor according to an embodiment;
Fig. 2D is an enlarged image of a unit electrode of the capacitive pressure sensor according to an embodiment;
Fig. 3 is a plan view showing a wiring structure of a plurality of unit electrodes constituting the second electrode in the capacitive pressure sensor according to an embodiment;
Fig. 4 is a table showing types of appearance of an icon (display pattern of a display layer) and a transmittance of light for each of a plurality of dielectric layers made of the same material and having different thicknesses in the capacitive pressure sensor according to an embodiment;
Fig. 5A is a comparison table showing types of materials that can be used for a dielectric layer and the amount of deformation and a relative permittivity thereof in capacitive pressure sensors including the capacitive pressure sensor according to an embodiment;
Fig. 5B shows a deformed shape of a dielectric layer made of a foam in the case of applying a pressure to the capacitive pressure sensor according to an embodiment;
Fig. 5C shows a deformed shape of a dielectric layer made of rubber in the case of applying a pressure to a capacitive pressure sensor according to a comparative example;
Fig. 6 is a graph showing a relationship between a pressure applied to a capacitive pressure sensor and a change amount of a measurement value in a capacitive pressure sensor according to an embodiment in which a sponge is used as a dielectric and two capacitive pressure sensors according to comparative examples in which a material other than the sponge is used as the dielectric;
Fig. 7 is a graph showing a relationship between a pressed amount of the sponge and a relative permittivity in the capacitive pressure sensor according to an embodiment in which the sponge is used as the dielectric;
Fig. 8 is a graph obtained based on an actual measurement data showing a relationship between a change amount of a measurement value detected for each unit electrode when a predetermined pressure is applied and an electrode area of a unit electrode in the capacitive pressure sensor according to an embodiment; and

Fig. 9 is a comparison table showing a plurality of materials that can be used for a dielectric layer and physical property values thereof in capacitive pressure sensors including the capacitive pressure sensor according to an embodiment.

Detailed Description

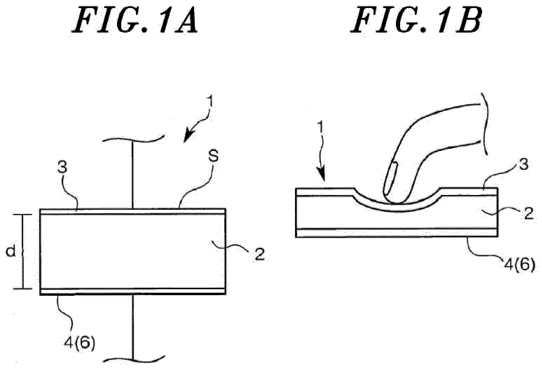

A capacitive pressure sensor 1 according to an embodiment of the present disclosure will be described with reference to Figs. 1 to 9.

First, the principle of pressure detection using the capacitive pressure sensor 1 will be described with reference to Figs. 1A and 1B.

As shown in Fig. 1A, the capacitive pressure sensor 1 includes a dielectric layer 2, a first electrode 3 disposed on an upper surface that is a first surface of the dielectric layer 2, a second electrode 4 disposed on a bottom surface that is a second surface of the dielectric layer 2, and a measuring device (not shown in Fig. 1A) for detecting a measurement value R that is in proportion to a change in a capacitance of the dielectric layer 2 by causing a potential difference between the first electrode 3 and the second electrode 4.

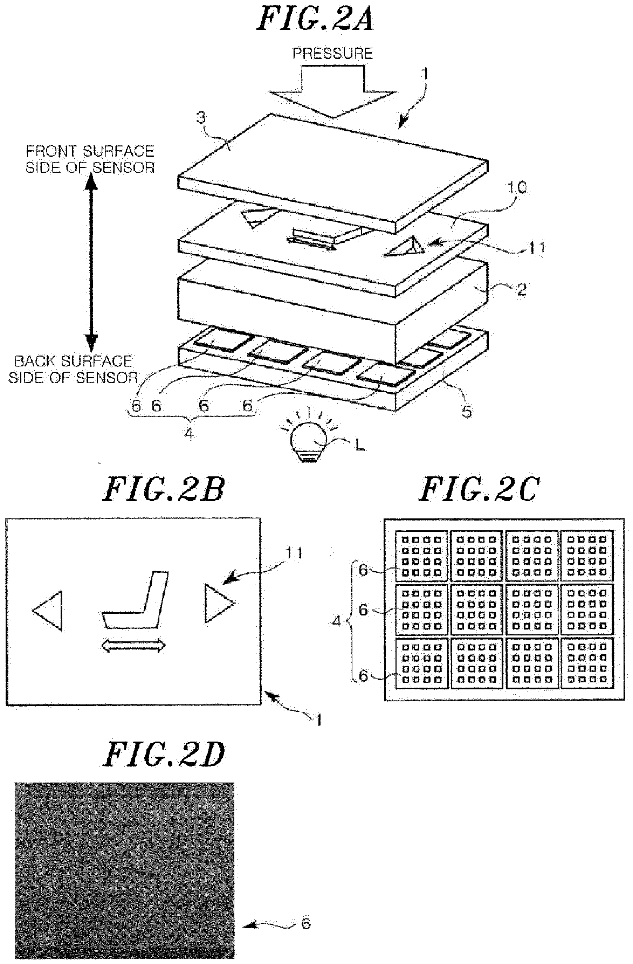

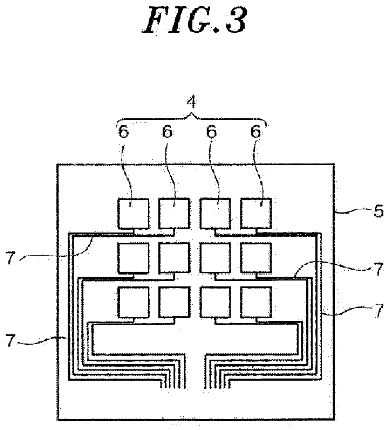

The structure shown in Fig. 1A schematically shows a portion corresponding to one of a plurality of unit electrodes included in the capacitive pressure sensor according to an embodiment. As shown in Figs. 2 and 3, the capacitive pressure sensor that is an actual product has a structure in which a plurality of sensors having the structure shown in Fig. 1A are arranged in parallel vertically and horizontally and connected in a self-capacitance wiring structure. The electrode structure, the wire connection structure, and the like will be described in detail later. For convenience, among the components shown in Fig. 1A, the components having the same functions as those shown in Fig. 2 are denoted by like reference numerals.

A capacitance $C_X$ of the capacitive pressure sensor 1 shown in Fig. 1A is expressed by the following Eq. (1).

$$C_X = \varepsilon_0 \varepsilon_r (S/d) = \varepsilon_0 S \times (\varepsilon_r/d) = k(\varepsilon_r/d) \qquad Eq. \ (1)$$

Here, $\varepsilon_0$ represents a permittivity of vacuum; $\varepsilon_r$ represents a relative permittivity of a dielectric forming the dielectric layer 2; S represents areas of the first electrode 3 and the second electrode 4; d represents a distance between the first electrode 3 and the second electrode 4; and k is a constant.

In the capacitive pressure sensor 1 according to an embodiment, the sensor having the structure shown in Fig. 1A is connected in a self-capacitiance wiring structure as described above. Therefore, an overall capacitance $C_S$ is the sum of a capacitance $C_X$ of the sensor and a capacitance (parasitic capacitance) $C_b$ of the wire or the like connected to the sensor, as shown in the following Eq. (2).

$$C_S = C_X + C_b \qquad Eq. \ (2)$$

Therefore, as shown in the following Eq. (3), the measuring device outputs the measurement value R that is in proportional to the capacitance $C_S$ for each sensor.

$$R = k \times C_S \qquad Eq. \ (3)$$

As shown in Fig. 1B, when a user presses the first electrode 3 with a finger or the like, the first electrode 3 and the dielectric layer 2 are deformed so that the distance d is reduced. Accordingly, as can be seen from Eq. (1), the capacitance $C_X$ of the capacitive pressure sensor 1 increases. Hence, $C_S$ increases as can be seen from Eq. (2), and the measurement value R of the measuring device increases as can be seen from Eq. (3).

In the following description, $\Delta R$ indicates the change amount of the measurement value R. The magnitude of the pressure in the case where a user presses the first electrode 3 with a finger or a pressing device can be detected as a value obtained by subtracting the measurement value R of the capacitive pressure sensor 1 in a reference state from the current measurement value R, i.e., the change amount $\Delta R$.

Next, a specific structure of the capacitive pressure sensor 1 according to an embodiment will be described with reference to Figs. 2 to 4.

As shown in the exploded perspective view of Fig. 2A, the capacitive pressure sensor 1 includes the dielectric layer 2 that is an intermediate layer, a display layer 10 disposed on an upper surface side that is a first surface of the dielectric layer 2, the first electrode 3 disposed on the upper surface side of the display layer 10, a substrate 5 disposed on the bottom surface side that is a second surface of the dielectric layer 2, and the second electrode 4 disposed on the upper surface of the substrate 5, i.e., on the side facing the bottom surface of the dielectric layer 2. In other words, the dielectric layer 2 is disposed between the first electrode 3 and the second electrode 4, and the display layer 10 is disposed between the first electrode 3 and the dielectric layer 2. As shown in Fig. 2A, in the capacitive pressure sensor 1, the first electrode 3 side serves as the front surface side (hereinafter, also referred to as "sensor surface") of the sensor to which a pressure is applied by a user's touch with a finger or the like, and the substrate 5 side or the electrode 4 side serves as the back surface side of the sensor.

The first electrode 3 shown in Fig. 2A may be a conductive sheet-shaped member having flexibility or elasticity and having a light transmission property, e.g., a conductive fabric. However, the material of the first electrode 3 is not particularly limited. For example, a light-transmitting metal film (e.g., an ITO film) may be disposed on a back surface of a light-transmitting resin sheet. Further, a light-transmitting conductive polymer (e.g., PEDOT(poly(3,4-ethylenedioxythiophene)) or the like coated on the back surface of the light-transmitting resin sheet may also be used. If the first electrode 3 has a light-transmitting structure such as a mesh structure or the like, it is possible to obtain a special display effect of superimposing a light-transmitting structure pattern on the display pattern by the display layer 10. However, when such an effect is not desired, or when the effect of more clearly displaying the display pattern on the display layer 10 is desired, it is more preferable that the first electrode 3 is made of a light-transmitting material.

The display layer shown in Fig. 2A is a member in which a display pattern (also referred to as "icon") 11 is formed as holes in an insulating and light non-transmitting sheet. If a light source L is disposed on the back surface side of the sensor of the capacitive pressure sensor 1 as shown in Fig. 2A, the display pattern can be displayed below the first electrode 3 on the front surface side (sensor surface) of the capacitive pressure sensor 1, as shown in Fig. 2B. In other words, in the present embodiment, the display layer 10 is disposed between the first electrode 3 on the sensor surface side and the dielectric layer 2 disposed below the first electrode 3, so that the light from the light source L transmits the dielectric layer, and then transmits the display layer 10. Therefore, it is possible to obtain a good display effect of making the outline of the display pattern 11 clear.

The display pattern 11 shown in Figs. 2A and 2B includes, for example, a pattern in which two independent triangles are arranged side by side with their vertices facing the left side and the right side, a seat-shaped pattern disposed between the two triangles, and a double-headed arrow-shaped pattern disposed below the seat-shaped pattern. The capacitive pressure sensor 1 having such a display pattern is mounted on an automobile and used as an operating device for adjusting a position of a seat in a forward-backward direction. In other words, the triangle on the right side indicates the backward movement of the seat as a control target, and the triangle on the left side indicates the forward movement of the seat as the control target. The pressure applied to the display pattern 11 of each triangle is detected as the amount of movement of the seat in the forward-backward direction. When a user selects one of the two triangles displayed on the touch panel and presses it with a desired pressure, a signal for moving the seat forward or backward by a desired amount is outputted to a motor of a driving source, thereby adjusting the position of the seat.

The operating device for adjusting the forward-backward position of the seat of the automobile is a useful application example of the capacitive pressure sensor 1. However, this is merely an example, and the use of the capacitive pressure sensor 1 according to an embodiment is not particularly limited.

By using a colored and light poorly-transmitting sheet as the display layer 10, the shape of the display pattern 11 can be displayed as a light source color in a colored background. The display layer 10 having the display pattern 11 does not necessarily have a sheet shape, and may be printed on the upper surface of the dielectric layer 2 or the bottom surface of the first electrode 3.

The dielectric layer 2 shown in Fig. 2A is made of a sponge that is a polyethylene foam. The sponge has therein a large number of cavities containing air, and thus has a predetermined light transmission property. The relationship between the light transmittance of the sponge that is related to the display using the display layer 10 and the thickness of the sponge, or the physical properties of a dielectric used in the capacitive pressure sensor 1 will be described in detail later.

As shown in Fig. 2A, a rigid insulating substrate 5 having substantially the same outer shape as that of the dielectric layer 2 is attached to the bottom surface of the dielectric layer 2. The second electrode 4 is disposed on the upper surface of the substrate 5, i.e., on the side facing the bottom surface of the dielectric layer 2. Although the material of the substrate is not particularly limited, it is possible to use a plate material having an insulating property and a light-transmitting property, e.g., a transparent resin plate. As described above with reference to Fig. 2A, the first electrode 3, the display layer 10, the dielectric layer 2, and the substrate 5 have the same rectangular shape in plan view, and the capacitive pressure sensor 1 has a rectangular panel shape as a whole.

As shown in Figs. 2A and 2C and the wiring structure diagram of Fig. 3, the second electrode 4 includes twelve square unit electrodes 6 arranged at regular intervals in the arrangement of three rows × four columns. The number of unit electrodes 6 is not limited to twelve, and may be smaller than twelve or greater than or equal to thirteen, if necessary. The unit electrodes 6 may have a shape other than a square.

Fig. 2C is a schematic plan view of the second electrode 4 including the twelve unit electrodes 6. Fig. 2D is an enlarged image of one unit electrode 6 in plan view. As illustrated in Figs. 2C and 2D, the unit electrode 6 has a mesh-shaped light-transmitting structure including multiple through-holes formed on the entire surface thereof. The mesh-shaped light-transmitting structure in each unit electrode 6 of the second electrode 4 can be obtained by forming a mesh pattern of a metal film in which multiple holes are arranged on the surface of a substrate by a thin film forming technique such as screen printing or the like. Alternatively, the mesh-shaped light-transmitting structure can also be obtained by superimposing a mask having a mesh pattern in which multiple holes are arranged on a substrate and adhering a target metal onto the substrate through an opening of the mask by sputtering. The second electrode 4 may be made of a light-transmitting material such as ITO, PEDOT, or the like. Since, however, it is preferable that the second electrode 4 has a low resistivity in view of a response speed of a sensor, the second electrode 4 preferably has a mesh-shaped light-transmitting structure made of a material having a low resistivity, such as copper or the like.

As shown in Fig. 3, the twelve unit electrodes 6 arranged vertically and horizontally in three rows (arrangement of four unit electrodes 6 in the horizontal direction) × four columns (arrangement of three unit electrodes 6 in the vertical direction) are connected to a measuring device (not shown) disposed outside the substrate 5 by a wiring structure referred to as "self-capacitance wiring structure." Although not all the twelve unit electrodes 6 are marked in the drawing, dedicated wires 7 (not shown in Fig. 2) are respectively connected to the twelve unit electrodes 6. The twelve wires 7 are disposed on the substrate 5 without contact each other, and led out to the outside of the substrate 5 and connected to the measuring device (not shown) disposed outside the substrate 5. A predetermined voltage can be applied to the gap between each of the twelve unit electrodes 6 and a GND. Due to the self-capacitance wiring structure, the first electrode is grounded to the GND. As indicated by the above Eq. (2), the capacitance $C_S$ of each of the unit electrodes 6 forming the second electrode 4 is the sum of the capacitance $C_X$ of the sensor portion including the unit electrodes 6 and the capacitance (parasitic capacitance) $C_b$ of the wiring 7 or the like. The measuring device outputs the measurement value R that is in proportional to the capacitance $C_S$ as indicated by the above Eq. (3). In accordance with the self-capacitiance wiring structure, the structure of the unit electrode 6 and the wiring 7 is simple, and it is easy to calculate the capacitance $C_S$ and the measurement value R in the measuring device. In other words, the measurement value R (or the change amount ΔR thereof) can be obtained for each unit electrode 6 based on the principle of the capacitive pressure sensor 1 described with reference to Fig. 1.

In an embodiment, the self-capacitance structure is used for the structure of the unit electrode 6 and the connection structure using the wiring 7. However, a mutual capacitance structure may be used for the structure of the unit electrode and the connection structure using the wiring. In other words, in the structure example shown in Fig. 3, the twelve unit electrodes 6 arranged vertically and horizontally in three rows (arrangement of four unit electrodes 6 in the horizontal direction or X direction) × four columns (arrangement of three unit electrodes 6 in the vertical direction or Y direction) include an outer rectangular frame portion and a rectangular portion disposed inside the rectangular frame portion while being insulated from the rectangular frame portion. The four rectangular frame portions are connected to the four unit electrodes 6 in the horizontal (X) direction by common wires (three in total), and three rectangular portions are connected to the three unit electrodes 6 in the vertical (Y) direction by common wires (four in total). The intersecting portions of the wires in the horizontal (X) direction and the wires in the vertical (Y) direction have an insulating structure. Then, the three wires in the horizontal (X) direction and the four wires in the vertical (Y) direction are arranged on the substrate 5 without contact with each other, and led out to the outside of the substrate 5 and connected to the measuring device (not shown) disposed outside the substrate 5. Although the first electrode 3 is connected to the GND in the self-capacitance structure, it is not necessary to connect the first electrode 3 to the GND in the mutual capacitance structure. In the mutual capacitance structure, the structure of the unit electrode and the wiring structure are complicated compared those in the self-capacitance structure, and the calculation of the capacitance $C_S$ and the measurement value R in the measuring device is also complicated. However, when there are a large number of unit electrodes, the wire arrangement or the like is limited in the self-capacitance structure adopted in an embodiment. Therefore, the mutual capacitance structure may be adopted.

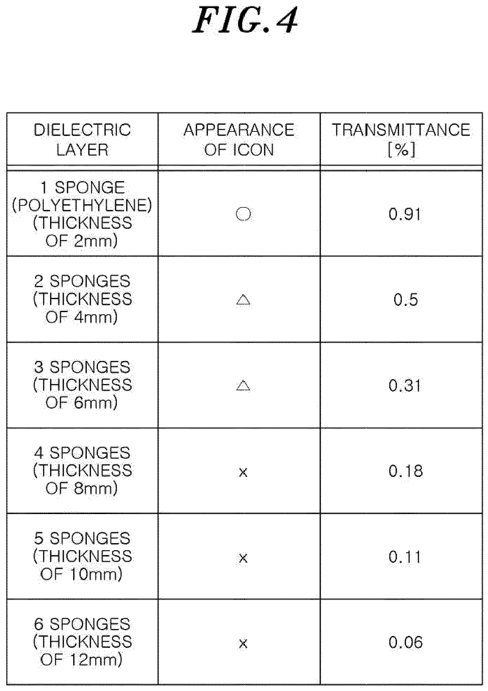

Next, the relationship between the light transmittance of the sponge that is related to the display using the display layer 10 and the thickness of the sponge will be described with reference to Fig. 4. As described above, the capacitive pressure sensor 1 is a panel having a structure in which the light-transmitting first electrode 3, the display layer 10 that transmits light through the light-transmitting display pattern 11, the dielectric layer 2 made of a sponge, the light-transmitting second electrode, and the substrate 5 are laminated. The light from a light source on the back surface side of the sensor transmits through the panel and reaches a user on the front surface side of the sensor, so that the display pattern 11 is visually recognized. Here, among the components of the capacitive pressure sensor 1, the first electrode 3, the display pattern 11 of the display layer 10, the light-transmitting second electrode, and the substrate 5, which are made of a light-transmitting material or have a hole (the display pattern 11), have a sufficient light transmission property. Although the sponge of the dielectric layer 2 has a light-transmitting property, it is expected that an excessively thick sponge blocks light so that the display pattern 11 cannot be visually recognized.

Therefore, the inventors of the present disclosure prepared a plurality of sheets of polyethylene sponge having a thickness of 2 mm in the capacitive pressure sensor 1 according to an embodiment, and then manufactured six types of capacitive pressure sensors 1 using one to six sheets. Next, as shown in Fig. 1A, the back surface side of the sensor was illuminated with the light source L having a constant brightness, and light transmission rates (%) of the capacitive pressure sensors 1 were measured. The appearance of the icon 11 was evaluated by three grades of ○ (excellent), △ (good), and × (bad) and listed in Fig. 4.

According to the data shown in Fig. 4, a practically acceptable display (△) was obtained up to the case of using three sheets of sponge, but the most preferable display (○) was obtained in the case of using a single sheet. If there are four or more sponges, the transmittance becomes less than 0.2%, and the icon 11 is hardly visible.

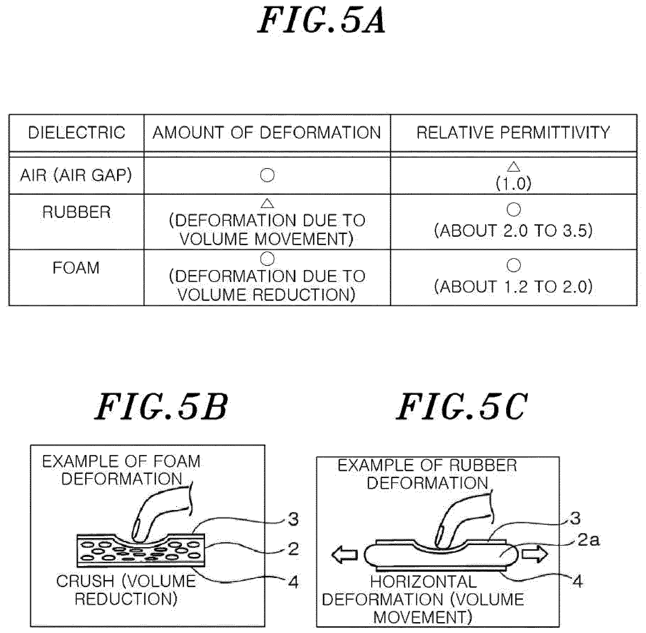

Next, the material of the dielectric layer 2 in the capacitive pressure sensor 1 according to an embodiment will be described with reference to Figs. 5 to 7.

In the capacitive pressure sensor 1 according to an embodiment, a foam (sponge) is used as a material of the dielectric layer 2, as will be described later. Fig. 5A is a comparison table showing types (three types) of materials that can be used for the dielectric layer 2 in the capacitive pressure sensor 1, the deformation amount and the relative permittivity thereof, and the symbol ◦ (excellent) or △ (good) indicating the evaluation thereof. In a general conventional capacitive pressure sensor, air (air gap) or elastically deformable rubber is often used as the dielectric layer that is an intermediate layer. However, as can be seen from this table, air has a low relative permittivity compared to a foam, and rubber is less likely to be deformed compared to a foam. Hence, both air and rubber have a low sensitivity, and thus cannot be adopted in an embodiment in which the high-accuracy pressure detection is required. In an embodiment, a foam is used as the material of the dielectric layer 2. The foam is easily deformed because bubbles (voids) in the foam are crushed and the volume of the foam (the dielectric layer 2) decreases when a pressure is applied thereto as shown in Fig. 5B, whereas and the rubber (the dielectric layer 2a) is not easily deformed because the rubber moves horizontally and the volume of the rubber does not decrease when a pressure is applied thereto as shown in Fig. 5C. In an embodiment, the dielectric layer 2 is made of a foam having bubbles, so that the relative permittivity and the deformation amount with respect to the pressure increase compared to the material of the comparative example. Accordingly, the change in the capacitance increases, which makes it possible to realize a highly sensitive capacitive pressure sensor.

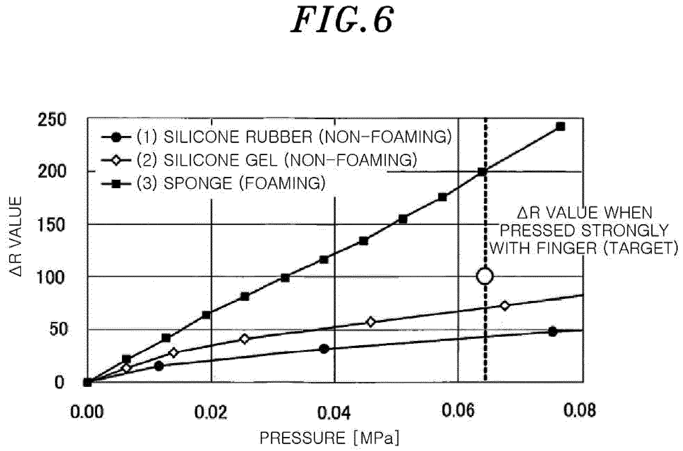

Fig. 6 is a graph obtained showing, based on test results, a relationship between a pressure applied to the capacitive pressure sensor 1 according to an embodiment in which the dielectric layer 2 is made of a sponge 3 and the capacitive pressure sensor in which the dielectric layer is made of a material (silicone gel 2 and silicone rubber 1) other than the sponge and the change amount $\Delta R$ of the measurement value. The capacitive pressure sensor according to an embodiment and the capacitive pressure sensor according to the comparative example have the same material, the same structure, or the like, but they are different in the material of the dielectric layer.

According to the data of Fig. 6, in any capacitive pressure sensor, the change amount $\Delta R$ of the measurement value R increases with a substantially constant proportional constant when a pressure is applied. However, the proportional constant of the pressure and the change amount $\Delta R$ was largest in the capacitive pressure sensor 1 according an embodiment in which the dielectric layer 2 is made of a sponge. As will be described in detail later, when the change amount $\Delta R$ in which the pressure can be effectively detected in the case of pressing the capacitive pressure sensor 1 with a finger is set to 100 under certain realistic conditions, the test results show that the change amount $\Delta R$ exceeded 100 only in the capacitive pressure sensor 1 according to an embodiment, and the change amount $\Delta R$ did not exceed 100 even if the pressure was increased in two comparative examples in which the dielectric layer 2 is made of a material other than the sponge 3. This indicates that when a pressure over a pressure that is expected to be actually applied to the capacitive pressure sensor 1 is applied, high-precision pressure detection cannot be performed in the capacitive pressure sensor according to the comparative example because the change amount $\Delta R$ in which the pressure can be effectively detected is not obtained, whereas the high-precision pressure detection can be performed in the capacitive pressure sensor 1 according to an embodiment.

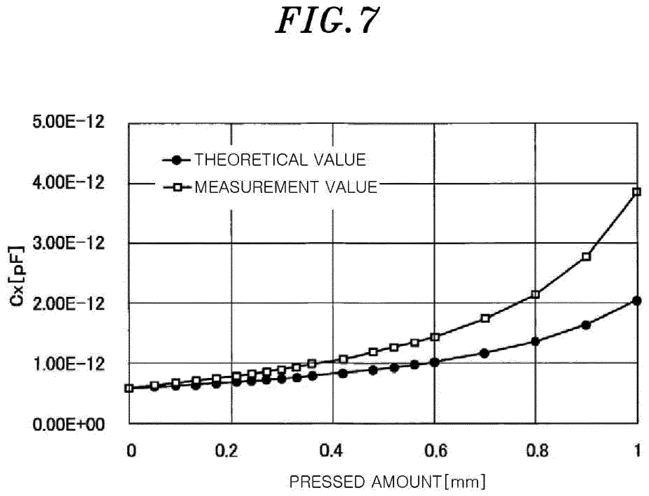

Fig. 7 shows, as theoretical values and actual measurement values, the relationship between a pressed amount (equal to the deformation amount shown in Fig. 4) of the sponge forming the dielectric layer 2 and a relative permittivity in the capacitive pressure sensor 1 according to an embodiment.

According to the data of Fig. 7, both the theoretical value and the measurement value of the capacitance increase as the pressed amount increases, i.e., as the distance d that is the thickness of the sponge decreases. The theoretical value of the relative permittivity is $2.00 \times 10^{-12}$ when the pressed amount is 1 mm, but the measurement value of the relative permittivity is $3.88 \times 10^{-12}$ when the pressed amount is 1 mm, which is a rapid increase compared to the theoretical value.

As shown in Fig. 5B, when a pressure is applied to the foam, bubbles in the foam are crushed and the volume of the foam decreases. The difference between the theoretical value and the actual measurement value shown in Fig. 7 is considered to be caused by the decrease in the proportion of air due to crushed bubbles in the foam by a pressure applied thereto and the increase in the overall relative permittivity. From the above results, the foaming material that allows the distance d between the first electrode 3 and the second electrode 4 to be easily decreased due to a high forming rate and has a relative dielectric constant that easily increases due to the crushing of bubbles is suitable for the dielectric layer 2 of the capacitive pressure sensor 1 according to an embodiment.

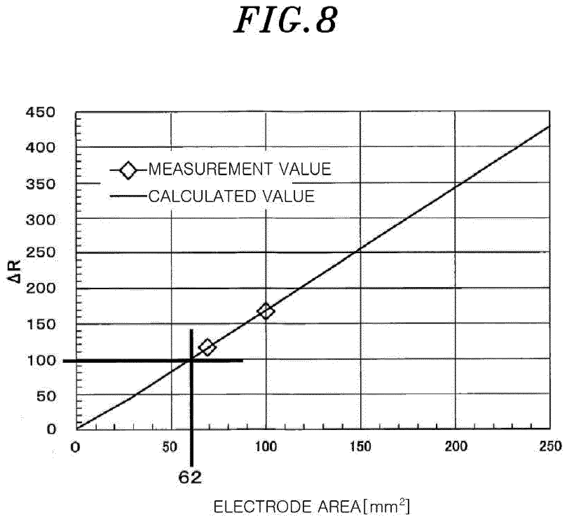

Next, the relationship between the electrode area of the unit electrode 6 and the number of pressure detection steps in the capacitive pressure sensor 1 according to an embodiment will be described with reference to the actual measurement data shown in Fig. 8. The following description relates to a method of determining a minimum electrode area of the unit electrode 6 in order to detect a pressure with a required accuracy and detect the position information on the sensor surface with high precision when a pressure is applied to the unit electrode 6 in the capacitive pressure sensor 1 according to an embodiment.

A straight line rising to the right side in Fig. 8 is a graph of actual measurement data obtained from two actual measurement values (expressed by $\diamond$) indicating the relationship between the change amount $\Delta R$ of the measurement value R detected for each unit electrode 6 when a predetermined pressure is applied and the electrode area ($mm^2$) of the unit electrode 6 in the capacitive pressure sensor 1 according to an embodiment.

Here, on the assumption that the sensor surface of the capacitive pressure sensor 1 is pressed with a finger, a minimum change amount $\Delta R$ required for pressure detection, i.e., a minimum value of the change amount $\Delta R$ of the measurement value is obtained. Then, a minimum electrode area of the unit electrode 6 where the minimum value of the change amount $\Delta R$ is obtained is determined.

First, the measurement conditions are specified. It is assumed that a load for pressing the sensor surface is 5 [N] that is a load (max) required for operating a general mechanical switch with a finger. Further, it is assumed that a diameter of a device or a user's finger that presses the sensor surface is 10 [mm]. From such assumed values, a pressure (max) at the time of pressing the sensor surface is 0.064 [MPa].

Next, five steps are assumed as the pressure detection steps. The deviation in the measurement value of the change amount $\Delta R$ due to noise during measurement was obtained, and the standard deviation $\sigma$ of the change amount $\Delta R$ was set to 5 from a degree of deviation in the actual measurement value. Then, one step distinguished by pressure measurement was set to 20 from the value of $\pm 2\sigma$. As a result, 100 (five steps$\times(\pm 2\sigma)$=100) was the minimum value of the change amount $\Delta R$.

Next, the capacitive pressure sensor 1 in which the second electrode 4 includes a plurality of 8.3 mm$\times$8.3 mm (electrode area of about 68.9 $mm^2$) unit electrodes 6 and the capacitive pressure sensor 1 in which the second electrode 4 include a plurality of 10 mm$\times$10 mm (electrode area of 100 $mm^2$) unit electrodes 6 are manufactured. Then, in each of the capacitive pressure sensors 1, a load of 5 [N] was applied with a finger having a diameter of 10 [mm] and a pressure of 0.064 [MPa] was actually applied to the unit electrodes 6. Then, the measurement result of the change amount $\Delta R$ was obtained in each measuring device of the capacitive pressure sensors 1. On the coordinate plane of Fig. 8 showing the relationship between the electrode area (horizontal axis, $mm^2$) and the change amount $\Delta R$ (vertical axis), a first point ($\diamond$ on the lower left side in Fig. 8) is plotted from the electrode area (68.9 $mm^2$) of the 8.3 mm$\times$8.3 mm unit electrode 6 and the corresponding change amount $\Delta R$ and a second point ($\diamond$ on upper right side in Fig. 8) is plotted from the electrode area (100 $mm^2$) of the 10 mm$\times$10 mm unit electrode 6 and the corresponding change amount $\Delta R$ are plotted and a straight line passing through these two points is drawn. The equation representing the graph of the straight line is the relational expression between the electrode area and $\Delta R$. The two points are actual measurement data obtained by actual measurement, and the graph of the straight line obtained from the two points and the equation representing the graph are also actual measurement data.

Next, the electrode area in which the previously calculated minimum required change amount $\Delta R$ (minimum value of the change amount $\Delta R$) becomes 100 is calculated. In the graph or the relational expression of the straight line shown in Fig. 8, the read-out or calculated electrode area at the point where the change amount $\Delta R$ becomes 100 is 62 $mm^2$. Therefore, if the unit electrode 6 having an electrode area of 62 $mm^2$ is a square, the length of one side thereof is $\sqrt{62}$ ($mm^2$) = 7.9 (mm). This corresponds to the shape and the size of a normal user's finger.

If the electrode (e.g., square having an area of 62 mm$^2$ and one side of 7.9 mm) has an electrode area determined based on the change amount $\Delta R$ of 100, the pressure applied to the sensor surface can be reliably detected with precision of five steps at the assumed specified pressure (0.064 [MPa]).

According to the relationship between the electrode area of the unit electrode 6 and the number of pressure detection steps, the unit electrode 6 has a minimum electrode area within a range in which the number of pressure detection steps, i.e., the pressure detection accuracy required by a user can be ensured. The accuracy of position detection on the sensor surface increases as the electrode area of the unit electrode 6 decreases. In other words, in accordance with the present disclosure, the position where a pressure is applied on the sensor surface of the capacitive pressure sensor 1 can be detected with high precision from the plurality of unit electrodes 6 having a minimum electrode area and, also, the pressure at the corresponding position can be detected with high precision at the number of steps required by a user.

Although the unit electrode 6 described above has a square shape, the shape thereof is not particularly limited and may be, e.g., a rhombus, a rectangle, a circle, or the like.

Although the foam (sponge) has been described as a material forming the dielectric layer 2 that has a large deformation amount and a high relative permittivity with reference to Figs. 5 to 6, it is necessary to select, as a material of the dielectric layer 2, a material that is deformed by a large amount when a pressure is applied and has a high relative permittivity in order to further reduce the electrode area of the unit electrode 6.

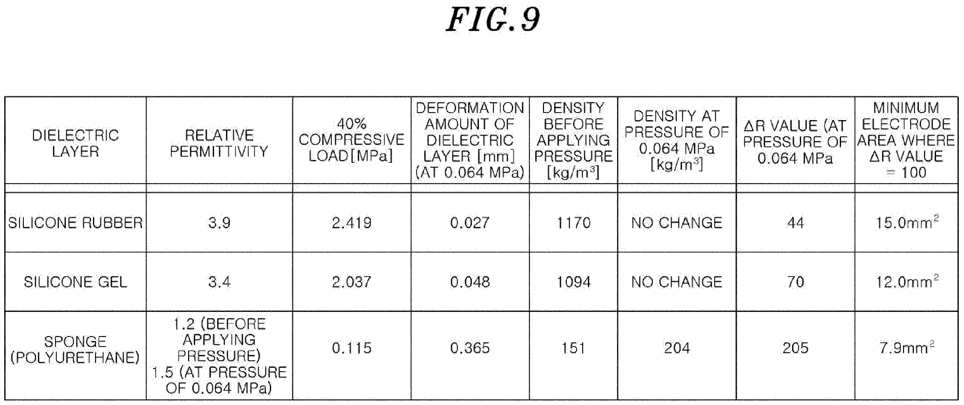

Fig. 9 is a comparison table comparing various physical property values including the relative permittivity and the deformation amount at a specified pressure of the sponge (polyurethane) forming the dielectric layer 2 of the capacitive pressure sensor 1 according to an embodiment, and the silicone rubber and the silicone gel in the comparative example in addition to a part of the description with reference to Figs. 5 to 8.

The posted specific physical amounts include the relative dielectric constant, the 40% compressive load [MPa], the deformation amount [mm] at the specified pressure (0.064 [MPa]) in the case of pressing the sensor which is assumed in the description of Fig. 7, the density [kg/cm$^3$] before pressure application, the density [kg/cm$^3$] at the specified pressure (0.064 [MPa]), the change amount $\Delta R$ at the specified pressure (0.064 [MPa]), and the minimum electrode area of the unit electrode 6 in which the change amount $\Delta R$ becomes 100 which is described with reference to Fig. 8.

The reason that a sponge (polyurethane) is suitable for a material of the dielectric layer 2 in the capacitive pressure sensor 1 according to an embodiment will be described based on the values in the comparison table of Fig. 9. The sponge contains a large amount of bubbles, and thus has a relative permittivity smaller than those of silicone rubber and silicone gel (hereinafter, referred to as "two comparative examples"). However, the 40% compressive load [MPa] of the sponge is smaller than or equal to 1/10 of those of the two comparative examples, and the deformation amount of the sponge [mm] at the specified pressure (0.064 [MPa]) in the case of pressing the sensor is greater than those of the two comparative examples by eight times or more. Since the sponge is easily deformed, it is easy to obtain high sensitivity in the capacitive pressure sensor 1. Further, since the sponge is easily pressed and deformed, bubbles are crushed (see Fig. 4B) and the relative permittivity increases, which makes it possible to obtain high sensitivity. In addition, the density [kg/cm$^3$] of the sponge before pressure application is smaller than those of the two comparative examples. The density [kg/cm$^3$] at the specified pressure (0.064 [MPa]) is substantially the same in the two comparative examples, but increases by 1.35 times in the case of the sponge, which indicates that the deformation amount increases due to crushing of bubbles by compression. The value of the change amount $\Delta R$) of the sponge at the specified pressure (0.064 [MPa]) is approximately three times or more than those of the two comparative examples. The minimum electrode area of the unit electrode 6 in which the change amount $\Delta R$ becomes 100 is smallest in the case of the sponge. When the unit electrode 6 is a square, the sponge has a side length of 7.9 mm, the silicone rubber has a side length of 15.0 mm, and the silicone gel has a side length of 12.0 mm. Therefore, the unit electrode 6 can be most compact in the case of an embodiment in which the sponge is adopted.

In accordance with the above-described embodiment, the effect of clearly displaying the shape of the display pattern 11 is obtained by arranging the display layer 10 between the first electrode 3 and the dielectric layer 2. However, in another embodiment, the display layer 10 may be disposed between the second electrode 4 and the dielectric layer 2. In this case, the light from the light source L transmits through the display layer 10, and then is diffused while transmitting through the dielectric layer 2, so that the effect of making the outline of the display pattern 11 clear cannot be obtained. However, it is possible to obtain a special display effect of blurring the outline of the display pattern 11. Whether the display layer 10 is disposed above or below the dielectric layer 2 may be arbitrarily selected depending on the content and purpose of the display.

As described above, in accordance with the present embodiment, it is possible to realize the capacitive pressure sensor 1 having a function of high-precision detection of both a position on the sensor surface and the pressure applied to corresponding the position, and also having a high-quality display function related to this detection function.

**Claims**

1.  A capacitive pressure sensor comprising:

    a dielectric layer made of a foam;
    a light-transmitting first electrode disposed on a first surface of the dielectric layer, wherein a pressure is applied to the first electrode;
    a second electrode disposed on a second surface of the dielectric layer opposite to the first surface, the second electrode including a plurality of unit electrodes having a predetermined shape;
    a display layer disposed between the first electrode and the dielectric layer or between the second electrode and the dielectric layer; and
    a measuring device configured to detect a measurement value of a capacitance of the dielectric layer for each unit electrode by causing a potential difference between the first electrode and the second electrode.

2.  The capacitive pressure sensor of claim 1, wherein each of the first electrode and the second electrode is made of a light-transmitting material or has a light-transmitting structure.

3. The capacitive pressure sensor of claim 1 or 2, wherein an electrode area of the unit electrode is determined using:

an actual measurement data indicating a relationship between the electrode area of the unit electrode and a change amount of the measurement value detected for each unit electrode by the measuring device when a pressure is applied to the first electrode; and
a minimum value of the change amount of the measurement value determined by conditions including the number of detection steps of a pressure detected for each unit electrode by the measuring device.

## FIG.1A

## FIG.1B

## FIG.2A

PRESSURE

1

3

FRONT SURFACE
SIDE OF SENSOR

10

11

2

BACK SURFACE
SIDE OF SENSOR

6 6    6    6

4

5

L

## FIG.2B

11

1

## FIG.2C

6

6

4

6

## FIG.2D

6

FIG.3

# *FIG.4*

| DIELECTRIC LAYER | APPEARANCE OF ICON | TRANSMITTANCE [%] |
|---|---|---|
| 1 SPONGE (POLYETHYLENE) (THICKNESS OF 2mm) | ○ | 0.91 |
| 2 SPONGES (THICKNESS OF 4mm) | △ | 0.5 |
| 3 SPONGES (THICKNESS OF 6mm) | △ | 0.31 |
| 4 SPONGES (THICKNESS OF 8mm) | x | 0.18 |
| 5 SPONGES (THICKNESS OF 10mm) | x | 0.11 |
| 6 SPONGES (THICKNESS OF 12mm) | x | 0.06 |

# FIG.5A

| DIELECTRIC | AMOUNT OF DEFORMATION | RELATIVE PERMITTIVITY |
|---|---|---|
| AIR (AIR GAP) | ○ | △<br>(1.0) |
| RUBBER | △<br>(DEFORMATION DUE TO VOLUME MOVEMENT) | ○<br>(ABOUT 2.0 TO 3.5) |
| FOAM | ○<br>(DEFORMATION DUE TO VOLUME REDUCTION) | ○<br>(ABOUT 1.2 TO 2.0) |

# FIG.5B

EXAMPLE OF FOAM DEFORMATION

CRUSH (VOLUME REDUCTION)

3
2
4

# FIG.5C

EXAMPLE OF RUBBER DEFORMATION

HORIZONTAL DEFORMATION (VOLUME MOVEMENT)

3
2a
4

# FIG.6

# FIG.7

# FIG.8

# FIG.9

| DIELECTRIC LAYER | RELATIVE PERMITTIVITY | 40% COMPRESSIVE LOAD[MPa] | DEFORMATION AMOUNT OF DIELECTRIC LAYER [mm] (AT 0.064 MPa) | DENSITY BEFORE APPLYING PRESSURE [kg/m³] | DENSITY AT PRESSURE OF 0.064 MPa [kg/m³] | ΔR VALUE (AT PRESSURE OF 0.064 MPa | MINIMUM ELECTRODE AREA WHERE ΔR VALUE = 100 |
|---|---|---|---|---|---|---|---|
| SILICONE RUBBER | 3.9 | 2.419 | 0.027 | 1170 | NO CHANGE | 44 | 15.0mm² |
| SILICONE GEL | 3.4 | 2.037 | 0.048 | 1094 | NO CHANGE | 70 | 12.0mm² |
| SPONGE (POLYURETHANE) | 1.2 (BEFORE APPLYING PRESSURE) 1.5 (AT PRESSURE OF 0.064 MPa) | 0.115 | 0.365 | 151 | 204 | 205 | 7.9mm² |

Europäisches
Patentamt

European
Patent Office

Office européen
des brevets

## EUROPEAN SEARCH REPORT

Application Number

EP 22 17 8912

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 107 918 502 A (MSTAR SEMICONDUCTOR INC) 17 April 2018 (2018-04-17) * abstract * * paragraph [0009] * * claims 1, 7 * ----- | 1-3 | INV. G01L1/14 G06F3/041 B25J13/08 G06F3/044 |
| A | US 2018/113512 A1 (KANG DOO SUK [KR] ET AL) 26 April 2018 (2018-04-26) * paragraphs [0091] - [0093] * ----- | 1 | |

TECHNICAL FIELDS
SEARCHED        (IPC)

G01L
G06F
B25J

The present search report has been drawn up for all claims

| Place of search | Date of completion of the search | Examiner |
|---|---|---|
| The Hague | 7 November 2022 | Grewe, Clemens F. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

....................................................................

& : member of the same patent family, corresponding document

EPO FORM 1503 03.82 (P04C01)

EP 4 105 623 A1

## ANNEX TO THE EUROPEAN SEARCH REPORT
## ON EUROPEAN PATENT APPLICATION NO.

EP 22 17 8912

This annex lists the patent family members relating to the patent documents cited in the above-mentioned European search report.
The members are as contained in the European Patent Office EDP file on
The European Patent Office is in no way liable for these particulars which are merely given for the purpose of information.

07-11-2022

| Patent document cited in search report | | Publication date | Patent family member(s) | | Publication date |
|---|---|---|---|---|---|
| CN 107918502 | A | 17-04-2018 | NONE | | |
| US 2018113512 | A1 | 26-04-2018 | KR 20180043617 | A | 30-04-2018 |
| | | | US 2018113512 | A1 | 26-04-2018 |

EPO FORM P0459

For more details about this annex : see Official Journal of the European Patent Office, No. 12/82

**EP 4 105 623 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015007562 A
- WO 2017057598 A